# FASCICULE DE BREVET EUROPEEN

(11) **EP 2 379 315 B1**
(45) Date de publication et mention de la délivrance du brevet: **25.02.2015**
(21) Numéro de dépôt: 09803875.5
(22) Date de dépôt: 16.12.2009
(51) Int. Cl.: B29D 30/06

(54) **ENSEMBLE DE GARNITURE SUR PEAU POUR UN MOULE DE VULCANISATION DE PNEUMATIQUES**
AUSKLEIDUNGSANORDNUNG AUF EINER HAUT EINER REIFENVULKANISIERUNGSFORM
LINING ASSEMBLY ON A SKIN FOR A TYRE VULCANIZATION MOULD

(30) Priorité: 17.12.2008 FR 0858708
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DUSSEAUX, Jean-Raymond, F-63530 Volvic (FR); BONNET, Daniel, F-63800 Saint-Georges-sur-Allier (FR)
(74) Mandataire: Lasson, Cédric Y. M.
(86) Numéro de dépôt international: PCT/FR2009/052568
(87) Numéro de publication internationale: WO 2010/076502

(56) Documents cités:
- EP-A- 0 523 958
- EP-A- 0 868 955
- DE-A1-102004 052 766
- GB-A- 588 170
- US-A- 3 082 480

## Description

L'invention concerne le domaine des moules de vulcanisation de pneumatiques, notamment des moules de type à secteurs.

Un moule à secteurs comprend plusieurs pièces séparées qui, par rapprochement relatif, délimitent un espace de moulage quasi-toroïdal. En particulier, un moule à secteurs comporte deux coquilles latérales pour le moulage des flancs du pneumatique, et plusieurs secteurs périphériques situés entre les coquilles pour le moulage de la bande de roulement du pneumatique. Le rapprochement de toutes ces pièces est assuré sur une cinématique appropriée par un mécanisme voulu. L'ébauche crue du futur pneumatique doit être fermement appliquée et maintenue contre le moule pour obtenir des dimensions géométriques et une architecture précise et pour imprimer la sculpture de la bande de roulement.

Pour former les sculptures de la bande de roulement, les secteurs du moule comprennent des éléments en saillie de la surface radialement intérieure des secteurs, ces éléments formant un négatif des sculptures à mouler sur la bande de roulement du pneumatique.

Pour qu'un même moule puisse être utilisé pour fabriquer des pneumatiques comprenant des formes de sculptures différentes, il est connu, par exemple du document EP 0 523 958, qu'un secteur du moule soit réalisé en plusieurs éléments : d'une part un bloc support ayant une forme générique définissant la courbure générale de la bande de roulement du pneumatique, et d'autre part une pluralité d'éléments de garniture rapportés sur le bloc support et destinés à former les sculptures de la bande de roulement du pneumatique.

Le document DE 102004052766 - A divulgue un ensemble conforme au préamble de la revendication 1 de la présente demande.

Ce document ne divulgue pas d'ensemble dans lequel l'épaisseur de la peau est comprise entre 0,25 et 3,00 millimètres.

Le document EP 868955 - A ne divulgue pas d'ensemble fabriqué par frittage laser, dans lequel l'épaisseur de la peau est comprise entre 0,25 et 3,00 millimètres.

Ainsi, pour adapter un moule à la fabrication d'un pneumatique présentant des sculptures données, il est nécessaire de rapporter successivement les différents éléments de garniture sur chaque bloc support des secteurs du moule.

Ces opérations d'adaptation du moule peuvent s'avérer longues et fastidieuses. Aussi, l'invention a notamment pour but de proposer un moule à secteurs pour la vulcanisation d'un pneumatique dont la fabrication et/ou l'adaptation peut être réalisée simplement et rapidement.

A cet effet, l'invention a pour objet un ensemble de garniture, caractérisé en ce qu'il comprend :
- une peau comprenant des première et seconde surfaces opposées, la première surface étant destinée à être en contact avec un bloc support d'un moule pour pneumatique, l'épaisseur de la peau étant comprise entre 0,25 et 3 millimètres, et
- une pluralité d'éléments de garniture en saillie de la seconde surface de la peau, les éléments de garniture étant destinés à former des sculptures d'une partie d'une surface radialement externe d'un pneumatique,
   la peau et les éléments de garniture étant réalisés d'un seul tenant par frittage laser.

Grâce à l'invention, les différents éléments de garniture de l'ensemble de garniture sont portés par la peau et peuvent ainsi être rapportés en une seule opération sur le bloc support du secteur du moule, lorsque la première surface de la peau est mise au contact de ce bloc support.

L'opération de fabrication du moule, ou d'adaptation du moule à un nouveau type de pneumatique est donc simplifiée par rapport au moule connu dans l'état de la technique puisqu'une seule opération est nécessaire pour venir rapporter plusieurs éléments de garniture sur le bloc support. Le positionnement relatifs des éléments de garniture entre eux est déterminé par leurs positions sur la peau de l'ensemble de garniture, lors de sa fabrication.

La faible épaisseur de la peau rend l'ensemble relativement léger. Il est ainsi possible de fixer l'ensemble de la peau et des éléments de garniture sur le bloc support par collage et sans autres moyens complexes de solidarisation. En outre, la faible épaisseur confère de la souplesse à l'ensemble de la peau et des éléments de garniture, ce qui permet de rattrapper les éventuels jeux d'assemblage entre l'ensemble et le bloc support. Enfin, l'ensemble étant réalisé d'un seul tenant, c'est-à-dire à partir d'une seule matière, il est relativement résistant. Il est notamment apte à supporter les contraintes exercées lors de la vulcanisation du pneumatique.

L'ensemble de garniture est réalisé par fusion sélective par laser plus communément nommé frittage par laser, frittage laser ou SLM (de l'anglais Selective Laser Melting). Les objets sont produits par la fusion sélective des poudres et construits par superposition de couches. L'intérêt de cette technique de fabrication de pièces est que la forme de la pièce peut être modélisée par ordinateur et la pièce peut être facilement fabriquée par frittage sur la base de cette modélisation. En effet, le laser peut être piloté par un ordinateur comprenant une modélisation de la pièce et l'on peut alors fabriquer la pièce par frittage successif de couches de poudre superposées. Cette méthode de fabrication d'éléments en métal est particulièrement bien adaptée à la fabrication de l'ensemble de garniture. En effet, cette méthode permet de réaliser des pièces de grandes dimensions et de formes complexes de manière très simple.

Un ensemble selon l'invention peut en outre comprendre l'une ou plusieurs des caractéristiques suivantes:
- La forme de la première surface de la peau est complémentaire de celle d'un bloc support d'un moule sur lequel l'ensemble de garniture est destiné à être rapporté. Ainsi, l'ensemble de garniture selon l'invention recouvre totalement le bloc support du secteur de moule qui n'est alors pas au contact avec la gomme du pneumatique à vulcaniser. Cela permet notamment de simplifier la forme du bloc support du secteur qui peut être par exemple lisse pour coopérer avec la première surface de la peau de l'ensemble de garniture.
- La seconde surface de la peau est conformée de manière à définir partiellement la forme du pneumatique lors de son moulage. En effet, cette seconde surface est destinée à venir au contact avec la gomme du pneumatique à vulcaniser. La seconde surface de la peau définit alors les parties lisses de la bande de roulement du pneumatique.

L'invention a également pour objet un procédé de fabrication d'un ensemble de garniture comprenant:
- une peau comprenant des première et seconde surfaces opposées, la première surface étant destinée à être en contact avec un bloc support d'un moule pour pneumatique, l'épaisseur de la peau étant comprise entre 0,25 et 3 millimètres, et
- une pluralité d'éléments de garniture en saillie de la seconde surface de la peau, les éléments de garniture étant destinés à former des sculptures d'une partie d'une surface radialement externe d'un pneumatique,
   procédé dans lequel on réalise la peau et les éléments de garniture d'un seul tenant par frittage laser.

L'invention sera mieux comprise à la lecture de la description qui va suivre, donnée uniquement à titre d'exemple et faite en se référant aux dessins dans lesquels :
- la figure 1 est une vue en perspective d'un ensemble de garniture selon l'invention,
- la figure 2 est une vue en perspective d'un secteur de moule comprenant un bloc support et l'ensemble représenté sur la figure 1,
- la figure 3 est une vue du dessus du secteur représenté sur la figure 2,
- la figure 4 est une vue en coupe du secteur représenté sur la figure 2.

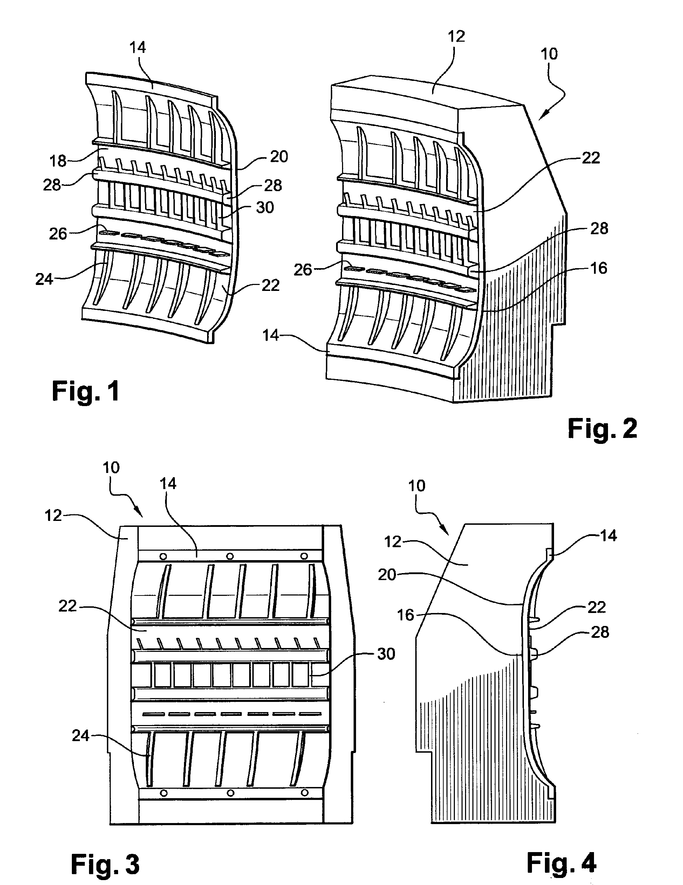

On a représenté sur la figure 2 un secteur, désigné par la référence générale 10 d'un moule à secteurs (non représenté) pour la vulcanisation d'un pneumatique.

Le secteur 10 comprend un bloc support 12 et un ensemble 14 de garniture rapporté sur le bloc support 12.

Le bloc support est formé par un bloc en acier massif comprenant notamment une surface support 16 destinée à recevoir l'ensemble 14 de garniture. La surface support 16 est sensiblement lisse et présente une forme épousant sensiblement la courbure générale de la bande de roulement du pneumatique à mouler.

L'ensemble 14 de garniture comprend une peau 18 comprenant des première 20 et seconde 22 surfaces opposées, la première surface 20 étant destinée à être en contact avec la surface support 16 du bloc support 12.

La peau 18 comprend en outre une pluralité d'éléments 24 de garniture en saillie de la seconde surface 22, les éléments 24 de garniture étant destinés à former les sculptures d'une partie de la bande de roulement du pneumatique à mouler.

Parmi les éléments 24 de garniture, l'ensemble 14 comprend notamment des lamelles 26 destinées à former des fentes circonférentielles dans la bande de roulement du pneumatique, ou des cordons circonférentiels 28 destinés à former un sillon longitudinal sur la bande de roulement du pneumatique.

Les différents cordons 28 sont reliés par des lamelles axiales 30 de manière à former un réseau d'éléments 24 de garniture.

L'épaisseur de la peau 14 est comprise entre 0,25 et 3 millimètres et les différents éléments 24 de garniture sont venus de matière avec la peau 18. En d'autres termes, l'ensemble 14 de garniture est réalisé d'un seul tenant.

Pour réaliser un tel ensemble 14 de garniture, on peut procéder par frittage laser sélectif d'une poudre métallique.

Lors de la fabrication de l'ensemble 14 de garniture, on veille à ce que la forme de la première surface 20 de la peau 18 soit complémentaire de la forme de la surface support 16 du bloc support 12 de manière à ce que la peau 18 puisse coopérer correctement avec le bloc support 12. En revanche, la forme des différents éléments 24 de garniture ménagés sur la peau 18 peut être quelconque et est définie en fonction du type de sculpture que l'on souhaite obtenir sur le pneumatique à mouler.

Ainsi, on peut concevoir différents types d'ensembles 14 de garniture dont les éléments 24 de garniture varient, chacun de ces ensembles 14 pouvant être positionné sur la surface 16 d'un même bloc support 12. Cela permet donc de pouvoir mouler différents types de pneumatiques dans un même moule sans avoir à changer les blocs supports 12 constituant ce moule.

Pour adapter un moule à la fabrication d'un nouveau type de pneumatique, il suffit de supprimer les ensembles 14 de garniture portés par les blocs supports 12, qui correspondent à l'ancien type de pneumatique fabriqué, puis de rapporter, en une seule opération, les nouveaux ensembles 14 de garniture sur la surface 16 du bloc support 12.

Du fait que les différents éléments 24 de garniture sont portés par une seule et unique peau 18, il est possible de rapporter tous les éléments de garniture d'un même secteur sur un bloc support 12 en une seule opération, ce qui est particulièrement rapide.

L'invention a été décrite en relation à un moule de type à secteurs. Elle peut également être mise en oeuvre en relation avec un moule d'un autre type.

## Revendications

1. Ensemble (14) de garniture, **caractérisé en ce qu'**il comprend :
- une peau (18) comprenant des première (20) et seconde (22) surfaces opposées, la première surface (20) étant destinée à être en contact avec un bloc support (12) d'un moule pour pneumatique, et
- une pluralité d'éléments de garniture (24) en saillie de la seconde surface (22) de la peau (18), les éléments de garniture étant destinés à former des sculptures d'une partie d'une surface radialement externe d'un pneumatique,
la peau (18) et les éléments de garniture (24) étant réalisés d'un seul tenant par frittage laser, **caractérisé en ce que** l'épaisseur de la peau (18) est comprise entre 0,25 et 3 millimètres.

2. Ensemble (14) selon l'une quelconque des revendications précédentes, dans lequel la forme de la première surface (20) de la peau (18) est complémentaire de celle d'un bloc support (12) de moule sur lequel l'ensemble de garniture (14) est destiné à être rapporté.

3. Ensemble (14) selon l'une quelconque des revendications précédentes, dans lequel la seconde surface (22) de la peau (18) est conformée de manière à définir partiellement la forme du pneumatique lors de son moulage.

4. Procédé de fabrication d'un ensemble (14) de garniture comprenant:
- une peau (18) comprenant des première (20) et seconde (22) surfaces opposées, la première surface (20) étant destinée à être en contact avec un bloc support (12) d'un moule pour pneumatique, et
- une pluralité d'éléments de garniture (24) en saillie de la seconde surface (22) de la peau (18), les éléments de garniture étant destinés à former des sculptures d'une partie d'une surface radialement externe d'un pneumatique,
procédé dans lequel on réalise la peau (18) et les éléments de garniture (24) d'un seul tenant par frittage laser, **caractérisé en ce que** l'épaisseur de la peau (18) est comprise entre 0,25 et 3 millimètres.

## Patentansprüche

1. Auskleidungsanordnung (14), **dadurch gekennzeichnet, dass** sie Folgendes umfasst:
- eine Haut (18), die eine erste (20) und eine zweite (22) Fläche umfasst, die sich gegenüberliegen, wobei die erste Fläche (20) dazu bestimmt ist, mit einem Stützblock (12) einer Luftreifenform in Kontakt zu sein, und
- mehrere Auskleidungselemente (24), die von der zweiten Fläche (22) der Haut (18) vorstehen, wobei die Auskleidungselemente dazu bestimmt sind, Profilmuster eines Teils einer radial äußeren Fläche eines Luftreifens zu bilden,
wobei die Haut (18) und die Auskleidungselemente (24) einstückig durch Lasersintern realisiert sind, **dadurch gekennzeichnet, dass** die Dicke der Haut (18) 0,25 bis 3 Millimeter beträgt.

2. Anordnung (14) nach Anspruch 1, wobei die Form der ersten Fläche (20) der Haut (18) zu der eines Formstützblocks (12) komplementär ist, an dem die Auskleidungsanordnung (14) angebracht werden soll.

3. Anordnung (14) nach einem der vorhergehenden Ansprüche, wobei die zweite Fläche (22) der Haut (18) so ausgebildet ist, dass sie die Form des Luftreifens während seines Formens teilweise definiert.

4. Verfahren zur Herstellung einer Auskleidungsanordnung (14), die Folgendes umfasst:
- eine Haut (18), die eine erste (20) und eine zweite (22) Fläche umfasst, die sich gegenüberliegen, wobei die erste Fläche (20) dazu bestimmt ist, mit einem Stützblock (12) einer Luftreifenform in Kontakt zu sein, und
- mehrere Auskleidungselemente (24), die von der zweiten Fläche (22) der Haut (18) vorstehen, wobei die Auskleidungselemente dazu bestimmt sind, Profilmuster eines Teils einer radial äußeren Fläche eines Luftreifens zu bilden,
wobei bei dem Verfahren die Haut (18) und die Auskleidungselemente (24) einstückig durch Lasersintern realisiert werden, **dadurch gekennzeichnet, dass** die Dicke der Haut (18) 0,25 bis 3 Millimeter beträgt.

## Claims

1. Lining assembly (14), **characterized in that** it comprises:
- a skin (18) having first (20) and second (22) opposed surfaces, the first surface (20) being intended to be in contact with a support block (12) of a tyre mould, and
- a plurality of lining elements (24) projecting from the second surface (22) of the skin (18), the lining elements being intended to form tread patterns on a portion of a radially external surface of a tyre, the skin (18) and the lining elements (24) being produced as one piece by laser sintering, **characterized in that** the thickness of the skin (18) is between 0.25 and 3 millimetres.

2. Assembly (14) according to Claim 1, in which the shape of the first surface (20) of the skin (18) is complementary to that of a mould support block (12) to which the lining assembly (14) is intended to be attached.

3. Assembly (14) according to either of the preceding claims, in which the second surface (22) of the skin (18) is shaped so as to partially define the shape of the tyre while it is being moulded.

4. Process for manufacturing a lining assembly (14), comprising:
- a skin (18) having first (20) and second (22) opposed surfaces, the first surface (20) being intended to be in contact with a support block (12) of a tyre mould, and
- a plurality of lining elements (24) projecting from the second surface (22) of the skin (18), the lining elements being intended to form tread patterns on a portion of a radially external surface of a tyre, in which process the skin (18) and the lining elements (24) are produced as one piece, by laser sintering, **characterized in that** the thickness of the skin (18) is between 0.25 and 3 millimetres.
